(19)

Europäisches
Patentamt

European
Patent Office

Office européen
des brevets

(11)  EP 4 654 330 A1

(12)  EUROPÄISCHE PATENTANMELDUNG

(43) Veröffentlichungstag:
26.11.2025  Patentblatt 2025/48

(21) Anmeldenummer: 24177961.0

(22) Anmeldetag: 24.05.2024

(51) Internationale Patentklassifikation (IPC):
H01M 10/54 (2006.01)

(52) Gemeinsame Patentklassifikation (CPC):
H01M 10/486; H01M 10/443; H01M 10/54

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(71) Anmelder: Siemens Aktiengesellschaft
80333 München (DE)

(72) Erfinder:
• Bellut, Lukas
  97737 Gemünden am Main (DE)

• Fischer, Michael
  91320 Ebermannstadt (DE)
• Katzer, Felix
  90763 Fürth (DE)
• Kraus, Alexander
  90489 Nürnberg (DE)
• Radinger, Hannes
  90459 Nürnberg (DE)
• Schmid, Arthur
  80337 München (DE)
• Schricker, Barbara
  91058 Erlangen (DE)

(74) Vertreter: Siemens Patent Attorneys
Postfach 22 16 34
80506 München (DE)

(54) **VERFAHREN ZUM DURCHFÜHREN EINER TIEFENENTLADUNG EINES ELEKTRISCHEN ENERGIESPEICHERS, COMPUTERPROGRAMMPRODUKT, COMPUTERLESBARES SPEICHERMEDIUM SOWIE TIEFENENTLADUNGSVORRICHTUNG**

(57)  Die Erfindung betrifft ein Verfahren zum Durchführen einer Tiefenentladung eines elektrischen Energiespeichers (12) mit zumindest zwei Batterien (14) mittels einer Tiefenentladungsvorrichtung (10), mit den Schritten: Anlegen eines vordefinierten Entladestroms (22) an den elektrischen Energiespeicher (12) mittels einer elektronischen Recheneinrichtung (16) der Tiefenentladevorrichtung (10); Erfassen zumindest einer ersten Temperatur (24) einer ersten Batterie (26) der zumindest zwei Batterien (14) mittels einer Erfassungseinrichtung (18) der Tiefenentladungsvorrichtung (10); Erfassen zumindest einer zweiten Temperatur (28) einer zweiten Batterie (30) der zumindest zwei Batterien (14) mittels der Erfassungseinrichtung (18); Bestimmen einer Differenz zwischen der ersten Temperatur (24) und der zweiten Temperatur (28) mittels der elektronischen Recheneinrichtung (16); und Adaptieren des Entladestroms (22) in Abhängigkeit von der bestimmten Differenz mittels der elektronischen Recheneinrichtung (16). Ferner betrifft die Erfindung ein Computerprogrammprodukt, ein computerlesbares Speichermedium sowie eine Tiefenentladungsvorrichtung (10).

FIG 1

EP 4 654 330 A1

**Beschreibung**

Die nachfolgende Erfindung betrifft ein Verfahren zum Durchführen einer Tiefenentladung eines elektrischen Energiespeichers mit zumindest zwei Batterien mittels einer Tiefenentladungsvorrichtung gemäß dem geltenden Patentanspruch 1. Ferner betrifft die Erfindung ein Computerprogrammprodukt, ein computerlesbares Speichermedium sowie eine Tiefenentladungsvorrichtung.

Das sichere und effiziente Recycling von Batterien ist ein Thema von wachsender Bedeutung angesichts des steigenden Verbrauchs elektronischer Geräte und der wachsenden Zahl an Elektroautos. Unter den verschiedenen Schritten des Recyclingprozesses spielt die Tiefenentladung vor dem eigentlichen Rückgewinnungsprozess aus zwei Gründen eine wichtige Rolle.

Von Lithium-Ionen-Batterien können bei unsachgemäßer Behandlung Gefahren ausgehen. In der Regel werden die Batterien im ersten Schritt des Recyclings in einem mechanischen Bearbeitungsschritt zerkleinert, insbesondere geschreddert. Dabei setzt sich die in der Batterie gespeicherte Energie schlagartig frei und stellt somit ein Sicherheitsrisiko dar. Auch finden viele Bearbeitungsschritte, wie die Demontage eines Packs/Moduls oder der Transport der Zellen in der Fabrik noch händisch statt. Ein Risiko für die Mitarbeiter ist deshalb unbedingt auszuschließen.

Des Weiteren, obwohl die Batterie möglicherweise nicht mehr ausreichend Leistung für den Betrieb im Second Life bietet, kann sie dennoch über Restladung verfügen. Durch gezielte Entladung dieser Restenergie kann beispielsweise ins Stromnetz zurückgespeist oder die Energie kann in einem Zwischenkreis zur Verwendung im restlichen Recycling-Prozess verwendet werden.

Bei der Tiefenentladung wird die verbleibende Energie in den Batterien kontrolliert und sicher entladen. Dieser Prozess gewährleistet, dass die Batterien in einem stabilen und sicheren Zustand sind, bevor sie weiterverarbeitet werden. Es verringert das Risiko von unkontrollierten Energieentladungen während des Transports oder der Lagerung und schützt so die Mitarbeiter, die für das Recycling zuständig sind, vor möglichen Gefahren.

Ziel ist es, die Tiefenentladung so schnell wie möglich durchzuführen, um Zeit pro Batterie zu sparen und mehr Durchsatz zu ermöglichen. Um dies zu erreichen, sind hohe Ladeströme I notwendig, die gemäß folgender Gleichung Joule'sche Wärme generieren:

$$Q = R \times I^2$$

, was die Erwärmung der Batterie zur Folge hat. Der Zellwiderstand R geht ebenfalls in die Gleichung mit ein. Batterien mit erhöhtem Widerstand erwärmen sich somit schneller.

Die Temperatur darf aus Sicherheitsgründen einen kritischen Wert $T_{krit}$ nicht überschreiten. Dies hat insbesondere den Hintergrund darin, da ab einen gewissen Punkt exotherme Reaktionen ablaufen können, die zu einer Selbsterwärmung der Batterie führen. Ab diesem Zeitpunkt muss die Batterie aktiv gekühlt werden, um das thermische Durchgehen zu verhindern. Dies ist sicherheitstechnisch besonders bedenklich, da es zum Brand oder zur Explosion der Batterie kommen kann.

Bei Batteriepacks und -Modulen handelt es sich um eine serielle und/oder parallele Verschaltung von Einzelzellen. Insbesondere im gealterten Zustand des Packs weisen die Zellen unterschiedliche Alterungszustände auf, was bedeutet, dass sie sich hinsichtlich Kapazität und elektrischen Widerstand unterscheiden. Bei variierenden Kapazitäten innerhalb eines seriellen Strangs kann es bei der Tiefenentladung dazu führen, dass Zellen mit geringer Kapazität unter 0 Volt entladen und umgepolt werden. Da in der Regel nicht auf das Batteriemanagementsystem zugegriffen werden kann, ist es ohne Weiteres nicht möglich, Einzelspannungen zu messen. Die Umpolung führt zu parasitären elektrochemischen Reaktionen, die eine beschleunigte Erwärmung verursachen und dazu führen kann, dass $T_{krit}$ überschritten wird.

In der Regel weisen gealterte Zellen mit hohem Kapazitätsverlust ebenfalls deutlich erhöhte Innenwiderstände auf. Dadurch wird das Problem der Überhitzung verschärft, weil sich diese Zellen gemäß der oben genannten Gleichung besonders stark aufgrund des Entladestroms erwärmen.

Um bei der Tiefenentladung der Batterie eine Überhitzung zu vermeiden, sind bereits unterschiedliche Maßnahmen im Stand der Technik bekannt. Beispielsweise ist eine chemische Deaktivierung bekannt. Das Batteriemodul wird in einer Salzwasserlösung entladen, um eine zu starke Erwärmung zu vermeiden. Hierbei kann das Modul zur Sicherheit an einem Verbraucher angeschlossen werden, um die elektrische Energie in den Zellen schneller abzuführen. Ein großes Problem dabei ist, dass der Prozess lange dauert und die Gesamtspannung des Packs oder des Moduls beim Herausholen aus der Lösung einen kritischen Wert von beispielsweise größer 100 Volt überschreitet. Die damit einhergehende hohe Restenergie stellt eine Gefährdung während der Weiterverarbeitung dar. Ferner ist eine langsame Tiefenentladung bekannt. Hierbei wird der Prozess der Tiefenentladung so langsam gesteuert, dass die Wärme an die Umgebung abgegeben werden kann. Hierbei müssen lange Wartezeiten in Kauf genommen werden. Auch kann nicht davon ausgegangen werden, dass sich alle Zellen gleich verhalten. Beispielsweise kann der Alterungszustand (State of Health) einzelner Batterien einen Einfluss auf die Erwärmung haben, wodurch eine langsame Entladung schwer zu kontrollieren ist.

Aufgabe der vorliegenden Erfindung ist es, ein Verfahren, ein Computerprogrammprodukt, ein computerlesbares Speichermedium sowie eine Tiefenentladungsvorrichtung zu schaffen, mittels welchen eine sichere Tiefenentladung eines elektrischen Energiespeichers realisiert werden kann.

Diese Aufgabe wird durch ein Verfahren, ein Computerprogrammprodukt, ein computerlesbares Speichermedium sowie eine Tiefenentladungsvorrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Durchführen einer Tiefenentladung eines elektrischen Energiespeichers mit zumindest zwei Batterien mittels einer Tiefenentladungsvorrichtung. Es wird ein vordefinierter Entladestrom an den elektrischen Energiespeicher mittels einer elektronischen Recheneinrichtung der Tiefenentladungsvorrichtung angelegt. Es wird zumindest eine erste Temperatur einer ersten Batterie der zumindest zwei Batterien mittels einer Erfassungseinrichtung der Tiefenentladungsvorrichtung erfasst. Es wird zumindest eine zweite Temperatur einer zweiten Batterie der zumindest zwei Batterien mittels der Erfassungseinrichtung erfasst. Es erfolgt das Bestimmen einer Differenz zwischen der ersten Temperatur und der zweiten Temperatur mittels der elektronischen Recheneinrichtung und das Adaptieren des Entladestroms in Abhängigkeit von der bestimmten Differenz mittels der elektronischen Recheneinrichtung.

Mit anderen Worten wird die Temperatur der Batterien innerhalb des elektrischen Energiespeichers überwacht. Dabei kann der elektrische Energiespeicher insbesondere auch mehr als zwei Batterien aufweisen. Mittels der Erfassungseinrichtung, welche lediglich auch ein Wärmebild erfassen kann und beispielsweise keine Absolutwerte der Temperatur erfassen kann, ist es möglich, die Überwachung des gesamten elektrischen Energiespeichers durchzuführen. Sollte sich nun beispielsweise eine Batterie stärker erwärmen als die andere, so ist davon auszugehen, dass diese einen erhöhten Innenwiderstand aufweist. Es kann nun davon ausgegangen werden, dass beispielsweise der Entladestrom zu groß gewählt ist, und beispielsweise eine Verringerung des Entladestroms durchzuführen ist, bis eine Erwärmung dieser einen Batterie reduziert wird.

Dabei kann insbesondere ebenfalls beobachtet werden, dass eine Temperaturerhöhung von Stromsammelschienen entsprechend mitberücksichtigt wird. In der Regel erhöhen sich die Temperaturen der Stromsammelschienen mehr. Auf Basis von optischen Erkennungsalgorithmen kann die Erfassungseinrichtung beispielsweise dazu ausgebildet sein, zwischen den Stromsammelschienen und den entsprechenden Batterien zu unterscheiden.

Insbesondere ist somit die Tiefenentladung mit einer entsprechenden Erfassungseinrichtung, beispielsweise einer Wärmebildkamera ausgestattet, welche die Temperaturverteilung auf der Oberfläche des elektrischen Energiespeichers aufnimmt. Das Messintervall kann dabei insbesondere bei niedrigen Packspannungen nahe der Entladeschlussspannung ausreichend hoch sein, zum Beispiel eine Messung alle 10 Sekunden. Während der Entladung erwärmen sich die Stromsammler in der Regel am stärksten, für das thermische Durchgehen ist die Erwärmung der Batterie jedoch kritischer zu bewerten. Neben den Hotspots an den Stromsammlern können hohe Innenwiderstände einzelner Batterien zu einer starken Erwärmung dieser führen. Dieser Hotspot unterscheidet sich in der Größe und Form von denen, die an den Stromsammlern entstehen und kann somit automatisiert erkannt werden. Ist eine deutliche Varianz beziehungsweise Differenz zwischen den Zellen erkennbar, deutet dies darauf hin, dass einzelne Batterien hohe Widerstände aufweisen und ein erhöhtes Risiko für das thermische Durchgehen besitzen. Dementsprechend muss in diesem Fall der Entladestrom beispielsweise reduziert werden, um das thermische Durchgehen der Batterie, um eine thermische Propagation auf das Pack beziehungsweise das Modul vorzubeugen. Bei homogener Temperaturverteilung kann der Entladestrom hingegen erhöht werden. Es ist nicht zwingend erforderlich, die absolute Temperatur zu messen, da bereits deutliche Temperaturunterschiede auf Unsicherheiten hindeuten. Sind die Emissionsfaktoren der Materialien und die Temperatur an Referenzpunkten, wie zum Beispiel der Unterlage, bekannt, kann die absolute Temperatur bestimmt werden. In diesem Fall könnte eine Temperaturvariation der Batterien toleriert werden, wenn diese beispielsweise einen festgelegten Toleranzwert nicht überschreitet.

Durch das vorgeschlagene Verfahren ergeben sich Unterschiede zum Stand der Technik dadurch, dass eine Überwachung der Temperatur beispielsweise durch Infrarottechnologie ermöglicht ist. Ferner kann eine Überwachung der Temperaturverteilung und des kritischen Temperaturanstiegs während der Tiefenentladung und damit eine Erhöhung der Sicherheit realisiert werden. Auch kann ein Abbruch des Entladevorgangs oder eine Verringerung des Entladestroms bei zu starken Temperaturvariationen oder bei zu hohen absoluten Temperaturen des Zellgehäuses durchgeführt werden. Dies ermöglicht eine schnelle Entladung bei homogener Temperaturverteilung. Des Weiteren kann eine Speicherung der Wärmebildaufnahmen für dezidierte Packs und ein Erstellen von Benchmarks realisiert werden. Somit kann ein online-fähiger Abgleich der Wärmebildaufnahmen der laufenden Entladung mit dem Benchmark realisiert werden, um kritische Zustände anhand von deutlichen Abweichungen zu identifizieren.

Gemäß einer vorteilhaften Ausgestaltungsform wird die Erfassungseinrichtung als Wärmebildkamera bereitgestellt. Somit ist es auf einfache Art und Weise ermöglicht, eine entsprechende Temperaturvarianz zwischen den einzelnen Batterien erfassen zu können. Wärmebildkameras haben sich bereits im Stand der Technik etabliert und können somit sehr einfach Temperaturvarianzen erfassen.

Eine weitere vorteilhafte Ausgestaltungsform sieht vor, dass die Erfassungseinrichtung als Infrarotkamera bereitgestellt wird. Insbesondere aufgrund der Infrarotstrahlung kann somit zuverlässig die Temperaturvarianz des elektrischen Energiespeichers erfasst werden.

Weiterhin vorteilhaft ist, wenn vor dem Anlegen des Entladestroms ein Deckelelement des elektrischen Energiespeichers entfernt wird. Insbesondere kann beispielsweise automatisiert das Deckelelement mittels der Tiefenentladungsvorrichtung entfernt werden. Alternativ kann manuell das Deckelelement entfernt werden. Dies hat insbesondere den Vorteil, dass somit zuverlässig direkt auf die Temperatur der Zellen geschlossen werden kann, da keine entsprechenden Gegenstände eine Sicht der Kamera auf die Zellen verdeckt. Somit kann eine zuverlässige Tiefenentladung des elektrischen Energiespeichers realisiert werden.

Ferner hat es sich als vorteilhaft erwiesen, wenn jeweilige Temperaturwerte als Temperaturen der jeweiligen Batterie bestimmt werden. Somit können beispielsweise Absolutwerte, mit anderen Worten detaillierte Gradzahlen, der Batterien bestimmt werden. Dies hat insbesondere den Vorteil, dass beispielsweise auch kritische Temperaturen, welche eine selbständige Erwärmung zur Folge hätten, mitberücksichtigt werden können.

Ebenfalls vorteilhaft ist, wenn ein jeweiliger Temperaturwert mit einem maximal erlaubten Temperaturwert verglichen wird und der Vergleich beim Adaptieren des Entladestroms berücksichtigt wird. Sollte beispielsweise der Temperaturwert den maximal erlaubten Temperaturwert überschreiten beziehungsweise kurz vor einem Überschreiten sein, so kann bereits eine Verringerung des Entladestroms realisiert werden. Somit kann ein selbstständiges thermisches Durchgehen der Batterie verhindert werden.

Eine weitere vorteilhafte Ausgestaltungsform sieht vor, dass der maximal erlaubte Temperaturwert zwischen 60 °C und 90 °C, insbesondere mit 70 °C, vorgegeben wird. Insbesondere bei Lithium-Ionen-Batterien hat sich der Wert von 70 °C als kritische Temperatur gezeigt, welche ein thermisches Durchgehen der Batterie zur Folge haben kann. Somit kann dieser Wert berücksichtigt werden und, beispielsweise sollten sich die Batterien unterhalb dieser Temperatur befinden, der Entladestrom entsprechend gleichbleiben beziehungsweise erhöht werden. Sollte sich jedoch die Temperatur der 70 Grad-Marke nähern, so kann der Entladestrom entsprechend reduziert werden, um somit ein selbständiges thermisches Durchgehen zu verhindern.

Ebenfalls vorteilhaft ist, wenn bei Überschreiten eines vorgegebenen ersten Differenzwerts der Entladestrom reduziert wird. Wenn die Temperaturen der Batterien sich entsprechend groß unterscheiden, mit anderen Worten den ersten Differenzwert überschreiten, so kann der Entladestrom entsprechend reduziert werden, so dass diejenige Batterie mit der höheren Temperatur entsprechend weniger belastet wird. Somit kann zuverlässig die Entladung in einer kurzen Zeitspanne durchgeführt werden und gleichzeitig ein thermisches Durchgehen verhindert werden.

Weiterhin vorteilhaft ist, wenn bei einem Unterschreiten eines vorgegebenen zweiten Differenzwerts der Entladestrom erhöht wird. Sollten die Temperaturunterschiede zwischen den Batterien entsprechend gering sein, so kann vorgesehen sein, dass unterhalb eines zweiten Differenzwerts der Entladestrom erhöht wird. Dies hat insbesondere den Hintergrund darin, dass mit dem derzeitig anliegenden Entladestrom ein thermisches Durchgehen der Batterie noch nicht zu verzeichnen ist. Somit kann der Entladestrom entsprechend erhöht werden, um die Zeit des Entladevorgangs entsprechend reduzieren zu können.

Ebenfalls vorteilhaft ist, wenn ein Temperaturwert von der Stromschiene des elektrischen Energiespeichers unberücksichtigt bleibt. Mit anderen Worten kann beispielsweise auf Basis der Wärmebildkamera die Stromschiene zuverlässig erkannt werden und die Temperatur der Stromschiene, welche im Normalfall oberhalb der Temperaturen der Batterien liegt, unberücksichtigt bleiben. Somit kann zuverlässig die Entladung der Batterien realisiert werden.

Eine weitere vorteilhafte Ausgestaltungsform sieht vor, dass bei einem Überschreiten eines vorgegebenen Temperaturwerts durch die erste Temperatur und/oder die zweite Temperatur der Entladevorgang abgebrochen wird. Sollte beispielsweise der Temperaturwert oberhalb einer kritischen Temperatur für die Batterie liegen, so kann der Entladevorgang komplett abgebrochen werden, um ein thermisches Durchgehen des Energiespeichers beim Entladen zu verhindern. Somit kann ein sicherer Entladevorgang realisiert werden.

Gemäß einer weiteren vorteilhaften Ausgestaltungsform kann zumindest auf Basis der erfassten Temperatur und des angelegten Entladestroms eine künstliche Intelligenz, insbesondere ein neuronales Netzwerk, zum zukünftigen Entladen angelernt werden. Insbesondere falls ein Batteriepack identifiziert werden kann, wird der Verlauf der Wärmebildverteilung über den Entladevorgang gespeichert. Somit entsteht ein Datenpool für beispielsweise jeden elektrischen Energiespeicher, in dem gespeichert wird, bei welchem Entladeprotokoll welche Wärmeverteilung entsteht und es kann ein Benchmark generiert werden. Während des Entladens wird die Wärmeverteilung online mit der Benchmark verglichen, um ein kritisches Verhalten zu identifizieren. Außerdem kann somit ein maximal möglicher Entladestrom angelernt werden, indem dieser für einen dedizierten elektrischen Energiespeicher so lange erhöht wird, bis tatsächlich kritische Zustände erreicht werden. Der optimale Entladestrom läge somit knapp unterhalb des kritischen Entladestroms. Somit kann zukünftig zeitreduziert ein Entladen des elektrischen Energiespeichers oder weiterer elektrischer Energiespeicher realisiert werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ebenfalls betrifft die Erfindung auch ein computerlesbares Speichermedium mit zumindest dem Computerprogrammprodukt nach dem vorhergehenden Aspekt.

Ein nochmals weiterer Aspekt der Erfindung betrifft eine Tiefenentladungsvorrichtung zum Durchführen einer Tiefenentladung eines elektrischen Energiespeichers mit zumindest zwei Batterien, mit zumindest einer elektronischen Recheneinrichtung und einer Erfassungseinrichtung, wobei die Tiefenentladungsvorrichtung zum Durchführen eines Verfahrens nach dem vorhergehenden Aspekt ausgebildet ist. Insbesondere wird das Verfahren mittels der Tiefenentladungsvorrichtung durchgeführt.

Vorteilhafte Ausgestaltungsformen des Verfahrens sind als vorteilhafte Ausgestaltungsformen des Computerprogrammprodukts, des computerlesbaren Speichermediums sowie der Tiefenentladungsvorrichtung anzusehen. Die Tiefenentladungsvorrichtung weist hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebene Kategorie für eine Klassifizierungsaufgabe, einen oder mehrere prädizierte Werte oder eine prädizierte Sequenz beinhalten kann.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:

Fig. 1     eine schematische Perspektivansicht einer Ausführungsform einer Tiefenentladungsvorrichtung; und

Fig. 2     eine schematische Draufsicht auf einen elektrischen Energiespeicher gemäß Fig. 1.

In den Figuren sind gleiche oder funktionsgleiche Elemente mit den gleichen Bezugszeichen versehen.

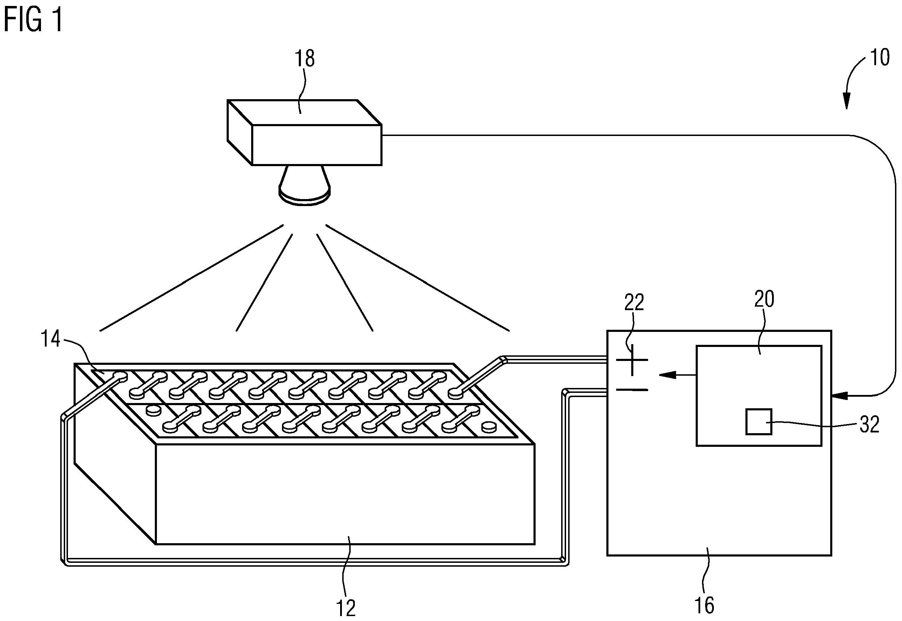

Fig. 1 zeigt eine schematische Perspektivansicht einer Ausführungsform einer Tiefenentladungsvorrichtung 10. Die Tiefenentladungsvorrichtung 10 ist zum Durchführen einer Tiefenentladung eines elektrischen Energiespeichers 12 mit zumindest zwei Batterien 14 ausgebildet. Hierzu weist die Tiefenentladungsvorrichtung 10 zumindest eine elektronische Recheneinrichtung 16 und eine Erfassungseinrichtung 18 auf. Ferner ist im vorliegenden Ausführungsbeispiel noch gezeigt, dass beispielsweise die elektronische Recheneinrichtung 16 eine Auswerteeinrichtung 20 aufweisen kann. Die Auswerteeinrichtung 20 ist beispielsweise zum Erzeugen von Steuersignalen für einen Entladestrom 22 sowie zur Auswertung beziehungsweise Bildanalyse ausgebildet.

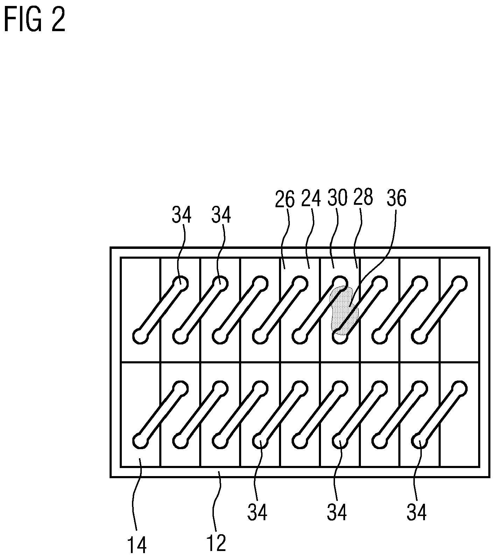

Insbesondere zeigt somit die Fig. 1 ein Verfahren zum Durchführen einer Tiefenentladung des elektrischen Energiespeichers 12. Es wird ein vordefinierter Entladestrom 22 an den elektrischen Energiespeichers 12 mittels der elektronischen Recheneinrichtung 16 angelegt. Es erfolgt das Erfassen einer ersten Temperatur 24 einer ersten Batterie 26 (Fig. 2) der zumindest zwei Batterien 14 mittels der Erfassungseinrichtung 18 und das Erfassen zumindest einer zweiten Temperatur 28 (Fig. 2) einer zweiten Batterie 30 der zumindest zwei Batterien 14. Es erfolgt das Bestimmen einer Differenz zwischen der ersten Temperatur 24 und der zweiten Temperatur 28 mittels der elektronischen Recheneinrichtung 16 und das Adaptieren des Entladestroms 22 in Abhängigkeit von der bestimmten Differenz mittels der elektronischen Recheneinrichtung 16. Insbesondere zeigt die Fig. 1 ferner, dass die Erfassungseinrichtung 18 als Wärmebildkamera ausgebildet sein kann. Ferner kann die Erfassungseinrichtung 18 auch als Infrarotkamera ausgebildet sein.

Des Weiteren ist in der Fig. 1 insbesondere gezeigt, dass vor dem Anlegen des Entladestroms 22 ein Deckelelement des elektrischen Energiespeichers 12 entfernt wird.

Weiterhin zeigt die Fig. 1 eine künstliche Intelligenz 32. Die künstliche Intelligenz 32 kann insbesondere auf Basis der erfassten Temperaturen 24, 28 und des angelegten Entladestroms 22 zum zukünftigen Entladen von weiteren Batterien entsprechend angelernt werden.

Fig. 2 zeigt wiederum eine schematische Draufsicht auf den elektrischen Energiespeicher 12 aus der Fig. 1. Die Fig. 2 zeigt ferner, dass beispielsweise die Batterien 14 über entsprechende Stromsammelschienen 34 miteinander verbunden werden können. Des Weiteren zeigt die Fig. 2 insbesondere, dass beispielsweise im vorliegenden Ausführungsbeispiel die zweite Temperatur 28 einen Hotspot 36 bildet. Insbesondere kann somit vorliegend vorgesehen sein, dass jeweilige Temperaturwerte als Temperaturen 24, 28 der jeweiligen Batterie 14 bestimmt werden. Dabei kann ein jeweiliger Temperaturwert mit einem maximal erlaubten Temperaturwert verglichen werden und der Vergleich beim Adaptieren des Entladestroms 22 berücksichtigt werden. Der maximal erlaubte Temperaturwert kann dabei zwischen 60 °C und 90 °C, insbesondere mit 70 °C, vorgegeben werden. Insbesondere ist der maximal erlaubte Temperaturwert, welcher auch als kritischer Temperaturwert bezeichnet werden kann, abhängig von der Art der verwendeten Batterien 14.

Ferner kann vorgesehen sein, dass bei Überschreiten eines vorgegebenen ersten Differenzwerts der Entladestrom 22 reduziert wird. Bei einem Unterschreiten eines vorgegebenen zweiten Differenzwerts kann der Entladestrom 22 hingegen erhöht werden. Beispielsweise kann oberhalb von 5°C als erster Differenzwert der Entladestrom 22 reduziert werden und unterhalb von 1°C als zweiter Differenzwert der Entladestrom 22 erhöht werden. Des Weiteren kann ein Temperaturwert von der Stromschiene 34 des elektrischen Energiespeichers 12 entsprechend unberücksichtigt bleiben. Ferner kann beim Überschreiten eines vorgegebenen Temperaturwerts durch die erste Temperatur 24 und/oder die zweite Temperatur 28 der Entladevorgang abgebrochen werden.

Insgesamt ist somit vorgesehen, dass die Tiefenentladungsvorrichtung 10 mit der Wärmebildkamera ausgestattet ist, welche die Temperaturverteilung auf der Oberfläche des elektrischen Energiespeichers 12 aufnimmt. Das Messintervall sollte zumindest bei niedrigen Packspannungen nahe der Entladeschlussspannung ausreichend hoch sein, zum Beispiel eine Messung alle 10 Sekunden. Alternativ kann das Messintervall auch angepasst werden, beispielsweise bei einer langsameren Aufwärmung weniger Aufnahmen und bei einer schnelleren Aufwärmung mehr Aufnahmen. Während der Entladung erwärmen sich die Stromsammelschienen 34 ausreichend hoch, in der Regel am stärksten. Für das thermische Durchgehen ist die Erwärmung der Batterien 14 jedoch kritischer zu bewerten. Neben dem Hotspot 36 an der Stromsammelschiene 34 können hohe Innenwiderstände einer einzelnen Batterie 14 zu einer starken Erwärmung dieser führen. Dieser Hotspot 36 unterscheidet sich in Größe und Form von denen, die an den Stromsammelschienen 34 entstehen und können automatisiert erkannt werden. Ist eine deutliche Varianz in den Batterien 14 erkennbar, deutet dies darauf hin, dass einzelne Batterien 14 hohe Widerstände aufweisen und ein erhöhtes Risiko für das thermische Durchgehen besitzen. Dementsprechend kann in diesem Fall der Entladestrom 22 reduziert werden, um dem thermischen Durchgehen einer der Batterien 14 und der thermischen Propagation auf den elektrischen Energiespeicher 12 vorzubeugen. Bei homogener Temperaturverteilung kann der Entladestrom 22 hingegen erhöht werden. Es ist nicht zwingend erforderlich, die absolute Temperatur zu messen, da bereits deutliche Temperaturunterschiede auf Unsicherheiten hindeuten. Sind die Emissionsfaktoren der Materialien und die Temperatur an Referenzpunkten wie zum Beispiel der Unterlage bekannt, kann die absolute Temperatur bestimmt werden. In diesem Fall kann auch eine Temperaturvariation der Batterien 14 toleriert werden, wenn die Temperatur einen festgelegten Toleranzwert nicht überschreitet. Dieser sollte jedoch geringer sein als $T_{krit}$, da lediglich die Temperatur des Zellgehäuses gemessen wird und diese nicht der relevanten Kerntemperatur der Batterie 14 entspricht.

Für die Überwachung der Temperaturverteilung mit Wärmebildkamera ist es vorteilhaft, dass die Batterien 14 unverdeckt sind. Denn für die optische Überwachung mittels Wärmebildkamera ist eine genaue räumliche Verortung der Hitzequelle gemäß Fig. 2 notwendig. Ist die Abdeckung noch vorhanden, muss eine gute Wärmeleitung von den Batterien 14 auf das Gehäuse vorhanden sein, damit Rückschlüsse auf die Temperatur individueller Batterien 14 möglich sind. Sind die Batterien 14 thermisch isoliert, kann das Verfahren nicht angewendet werden.

Falls der elektrische Energiespeicher 12 identifiziert werden kann, wird der Verlauf der Wärmeverteilung über den Entladevorgang mit der Tiefenentladungsvorrichtung 12 gespeichert. Somit entsteht ein Datenpool für jeden elektrischen Energiespeicher 12, in dem gespeichert wird, bei welchem Entladeprotokoll welche Wärmeverteilung entsteht, und ein Benchmark generiert. Während des Entladens wird die Wärmeverteilung online mit Benchmark verglichen, um kritische Verhalten zu identifizieren. Außerdem ist es möglich, den maximal möglichen Entladestrom 22 anzulernen, insbesondere mittels der künstlichen Intelligenz 32, indem dieser für einzelne dedizierte elektrische Energiespeicher 12 so lange erhöht wird, bis tatsächlich kritische Zustände erreicht werden. Der optimale Entladestrom 22 läge somit knapp unterhalb des kritischen Entladestroms 22.

Bezugszeichenliste

10    Tiefenentladungsvorrichtung

12    elektrischer Energiespeicher
14    Batterie
16    elektronische Recheneinrichtung
18    Erfassungseinrichtung
20    Auswerteeinrichtung
22    Entladestrom
24    erste Temperatur
26    erste Batterie
28    zweite Temperatur
30    zweite Batterie
32    künstliche Intelligenz
34    Stromschiene
36    Hotspot

**Patentansprüche**

1. Verfahren zum Durchführen einer Tiefenentladung eines elektrischen Energiespeichers (12) mit zumindest zwei Batterien (14) mittels einer Tiefenentladungsvorrichtung (10), mit den Schritten:

   - Anlegen eines vordefinierten Entladestroms (22) an den elektrischen Energiespeicher (12) mittels einer elektronischen Recheneinrichtung (16) der Tiefenentladevorrichtung (10);
   - Erfassen zumindest einer ersten Temperatur (24) einer ersten Batterie (26) der zumindest zwei Batterien (14) mittels einer Erfassungseinrichtung (18) der Tiefenentladungsvorrichtung (10);
   - Erfassen zumindest einer zweiten Temperatur (28) einer zweiter Batterie (30) der zumindest zwei Batterien (14) mittels der Erfassungseinrichtung (18);
   - Bestimmen einer Differenz zwischen der ersten Temperatur (24) und der zweiten Temperatur (28) mittels der elektronischen Recheneinrichtung (16); und
   - Adaptieren des Entladestroms (22) in Abhängigkeit von der bestimmten Differenz mittels der elektronischen Recheneinrichtung (16).

2. Verfahren nach Anspruch 1, **dadurch gekennzeichnet, dass** die Erfassungseinrichtung (18) als Wärmebildkamera bereitgestellt wird.

3. Verfahren nach Anspruch 1 oder 2, **dadurch gekennzeichnet, dass** die Erfassungseinrichtung (18) als Infrarotkamera bereitgestellt wird.

4. Verfahren nach einem der vorhergehenden Ansprüche, **dadurch gekennzeichnet, dass** vor dem Anlegen des Entladestroms (22) ein Deckelement des elektrischen Energiespeichers (12) entfernt wird.

5. Verfahren nach einem der vorhergehenden Ansprüche, **dadurch gekennzeichnet, dass** jeweilige Temperaturwerte als Temperaturen der jeweiligen Batterie (14) bestimmt werden.

6.  Verfahren nach Anspruch 5, **dadurch gekennzeichnet, dass** ein jeweiliger Temperaturwert mit einem maximal erlaubten Temperaturwert verglichen wird und der Vergleich beim Adaptieren des Entladestroms (22) berücksichtigt wird.

7.  Verfahren nach Anspruch 6, **dadurch gekennzeichnet, dass** der maximal erlaubte Temperaturwert zwischen 60°C und 90°C, insbesondere mit 70°C, vorgegeben wird.

8.  Verfahren nach einem der vorhergehenden Ansprüche, **dadurch gekennzeichnet, dass** bei einem Überschreiten eines vorgegebenen ersten Differenzwerts der Entladestrom (22) reduziert wird.

9.  Verfahren nach einem der vorhergehenden Ansprüche, **dadurch gekennzeichnet, dass** bei einem Unterschreiten eines vorgegebenen zweiten Differenzwerts der Entladestrom (22) erhöht wird.

10. Verfahren nach einem der vorhergehenden Ansprüche, **dadurch gekennzeichnet, dass** ein Temperaturwert von einer Stromschiene (34) des elektrischen Energiespeichers (12) unberücksichtigt bleibt.

11. Verfahren nach einem der vorhergehenden Ansprüche, **dadurch gekennzeichnet, dass** bei einem Überschreiten eines vorgegebenen Temperaturwerts durch die erste Temperatur (24) und/oder die zweite Temperatur (28) der Entladevorgang abgebrochen wird.

12. Verfahren nach einem der vorhergehenden Ansprüche, **dadurch gekennzeichnet, dass** zumindest auf Basis der erfassten Temperaturen und des angelegten Entladestrom (22) eine künstliche Intelligenz (32) zum zukünftigen Entladen angelernt wird.

13. Computerprogrammprodukt mit Programmcodemitteln, welche eine elektronische Recheneinrichtung (16) dazu veranlassen, wenn die Programmcodemittel von der elektronischen Recheneinrichtung (16) abgearbeitet werden, ein Verfahren nach einem der Ansprüche 1 bis 12 durchzuführen.

14. Computerlesbares Speichermedium mit zumindest dem Computerprogrammprodukt nach Anspruch 13.

15. Tiefenentladungsvorrichtung (10) zum Durchführen einer Tiefenentladung eines elektrischen Energiespeichers (12) mit zumindest zwei Batterien (14), mit zumindest einer elektronischen Recheneinrichtung (16) und einer Erfassungseinrichtung (18), wobei die Tiefenentladungsvorrichtung (10) zum Durchführen eines Verfahrens nach einem der Ansprüche 1 bis 12 ausgebildet ist.

FIG 1

EP 4 654 330 A1

FIG 2

Europäisches
Patentamt

European
Patent Office

Office européen
des brevets

# EUROPÄISCHER RECHERCHENBERICHT

**Nummer der Anmeldung**

EP 24 17 7961

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KR 2021 0124549 A (AIMS [KR]) 15. Oktober 2021 (2021-10-15) * Absätze [0013], [0017], [0018], [0027], [0073] * ----- | 1-15 | INV. H01M10/54 |
| A | US 2024/136606 A1 (NEMBHARD NICOLE [SE] ET AL) 25. April 2024 (2024-04-25) * Absätze [0015], [0075], [0083]; Abbildung 2 * ----- | 1-15 | |

**RECHERCHIERTE SACHGEBIETE (IPC)**

H01M

Der vorliegende Recherchenbericht wurde für alle Patentansprüche erstellt

| Recherchenort | Abschlußdatum der Recherche | Prüfer |
|---|---|---|
| Den Haag | 7. Januar 2025 | Goethals, Filip |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus anderen Gründen angeführtes Dokument
...................................................................................................
& : Mitglied der gleichen Patentfamilie, übereinstimmendes
      Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 17 7961

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-01-2025

| Im Recherchenbericht angeführtes Patentdokument | Datum der Veröffentlichung | Mitglied(er) der Patentfamilie | Datum der Veröffentlichung |
|---|---|---|---|
| KR 20210124549 A | 15-10-2021 | KEINE | |
| US 2024136606 A1 | 25-04-2024 | CA 3212287 A1 | 09-09-2022 |
| | | EP 4053965 A1 | 07-09-2022 |
| | | EP 4073869 A1 | 19-10-2022 |
| | | US 2024136606 A1 | 25-04-2024 |
| | | WO 2022184878 A1 | 09-09-2022 |

EPO FORM P0461

Für nähere Einzelheiten zu diesem Anhang : siehe Amtsblatt des Europäischen Patentamts, Nr.12/82